# EUROPEAN PATENT APPLICATION

(11) **EP 3 300 782 A2**
(43) Date of publication of application: **04.04.2018**
(21) Application number: 17190039.2
(22) Date of filing: 08.09.2017
(51) Int. Cl.: A63H 27/10, A63H 33/14

(54) **INFLATABLE TOY AND INFLATION DEVICE**

(30) Priority: 08.09.2016 US 201662385209 P
(71) Applicant: Moose Creative Management Pty Limited, Cheltenham, Victoria 3192 (AU)
(72) Inventor: McCafferty, Jim, San Clemente, CA California 92673 (US); Leong, Greg, Irvine, CA California 92602 (US); Delacy, Steve, Santa Ana, CA California 92701 (US)
(74) Representative: Nederlandsch Octrooibureau

(57) **Abstract**

An inflatable toy pellet can include a body. The body can be configured to be selectively punctured by a needle. The body can be sized and shaped so as to be grasped by an inflation device when punctured by the needle so as to expand the body from a first configuration to a second configuration.

## Description

### CROSS-REFERENCE TO RELATED APPLICATIONS

This application claims the benefit of U.S. Provisional Application No. 62/385,209, filed September 8, 2016, the entirety of which is hereby incorporated by reference.

### BACKGROUND

### Field

This invention relates to toys, and more particularly, relates to inflatable toy assemblies and methods and systems for inflation of such toys.

### Description of the Related Art

Toys can be assembled to create structures. Toy structures may include several interlocking components that can be attached and detached. Components may also be attached by applying an adhesive, by heating the components to fuse the components together using heat sources such as an iron or oven, or by engaging the components with a connecter such as a string, wire, thread, screw, or fastener.

### SUMMARY

In one aspect, an inflatable toy pellet is disclosed. The pellet includes a body and a stem extending outwardly from the body. The stem is configured to be selectively punctured by a needle. The stem is be sized and shaped so as to be grasped by an inflation device when punctured by the needle so as to expand the body from a first configuration to a second configuration.

In another aspect an inflation device for inflating a pellet is disclosed. The device includes a housing having a pump, a surface for supporting the pellet, and a needle in flow communication with the pump. The needle is configured to move between an extended position and a retracted position relative to the surface. At least a distal end of the needle is disposed above the surface when in the extended position so as to penetrate at least a portion of the pellet when the pellet is supported by the surface to allow fluid from the pump to exit the needle and inflate the pellet.

The needle in the inflation device is preferably hollow. The housing may comprise a check valve configured to prevent reverse fluid flow towards the pump

The inflation chamber may comprise a first section and a second section, the second section configured to move relative to the first section between an open position and a closed position. At least one of the first section and the second section could be configured to receive the pellet in the open position and secure at least a portion of the pellet relative to the surface in the second position.

In one embodiment, the pump comprises a piston slidingly disposed in a cylinder. Furthermore, a handle may be configured to actuate the pump.

In a further aspect, an inflatable toy pellet is disclosed. The pellet includes a body configured to be selectively punctured by a needle. The body is sized and shaped so as to be grasped by an inflation device when punctured by the needle so as to expand the body from a first configuration to a second configuration.

The body of the toy pellet may be an elliptical shape when in the first configuration, or may have a rounded or spherical shape in the first configuration.

### BRIEF DESCRIPTION OF THE DRAWINGS

The features of the present disclosure will become more fully apparent from the following description and appended claims, taken in conjunction with the accompanying drawings. Understanding that these drawings depict only several embodiments in accordance with the disclosure and are not to be considered limiting of its scope, the disclosure will now be described with additional specificity and detail through use of the accompanying drawings.
FIGURE 1 is a perspective view of an inflation device according to a preferred embodiment.
FIGURE 2 is another perspective view of the inflation device of Figure 1.
FIGURE 3 is a rear perspective view of the inflation device of Figure 1.
FIGURE 4 is a front view of the inflation device of Figure 1.
FIGURE 5 is a rear view of the inflation device of Figure 1 showing several interior sections.
FIGURE 6 is a side view of the inflation device of Figure 1.
FIGURE 7 is another side view of the inflation device of Figure 1.
FIGURE 8 is a top view of the inflation device of Figure 1.
FIGURE 9 is a bottom view of the inflation device of Figure 1.
FIGURE 10 is a front view of several internal components of the inflation device of Figure 1.
FIGURE 11 is an exploded view of the inflation device of Figure 1.
FIGURE 12 is a perspective view of several internal components of the inflation device of Figure 1.
FIGURE 13 is a cross-sectional view of the inflation device of Figure 1.
FIGURE 14 is a perspective view of an inflation chamber of the inflation device of Figure 1 and an inflatable pellet according to a preferred embodiment.
FIGURE 15 is a perspective view of the inflatable pellet of Figure 14.
FIGURE 16 is a front view of the inflatable pellet of Figure 14.
FIGURE 17 is a top view of the inflatable pellet of Figure 14.
FIGURE 18 is a bottom view of the inflatable pellet of Figure 14.
FIGURE 19 is a perspective view of a plurality of inflatable pellets and a connector in accordance with a preferred embodiment.
FIGURE 20 is a perspective view of a toy structure according to a preferred embodiment.

### DETAILED DESCRIPTION OF THE PREFERRED EMBODIMENT

The following detailed description is directed to certain specific embodiments. The invention(s) disclosed herein, however, can be embodied in a multitude of different ways as defined and covered by the claims. In this description, reference is made to the drawings, wherein like parts are designated with like numerals throughout. The features, aspects and advantages of the present invention will now be described with reference to the drawings of several embodiments that are intended to be within the scope of the development herein disclosed. These and other embodiments will become readily apparent to those skilled in the art from the following detailed description of the embodiments having reference to the attached figures, the invention not being limited to any particular embodiment(s) herein disclosed.

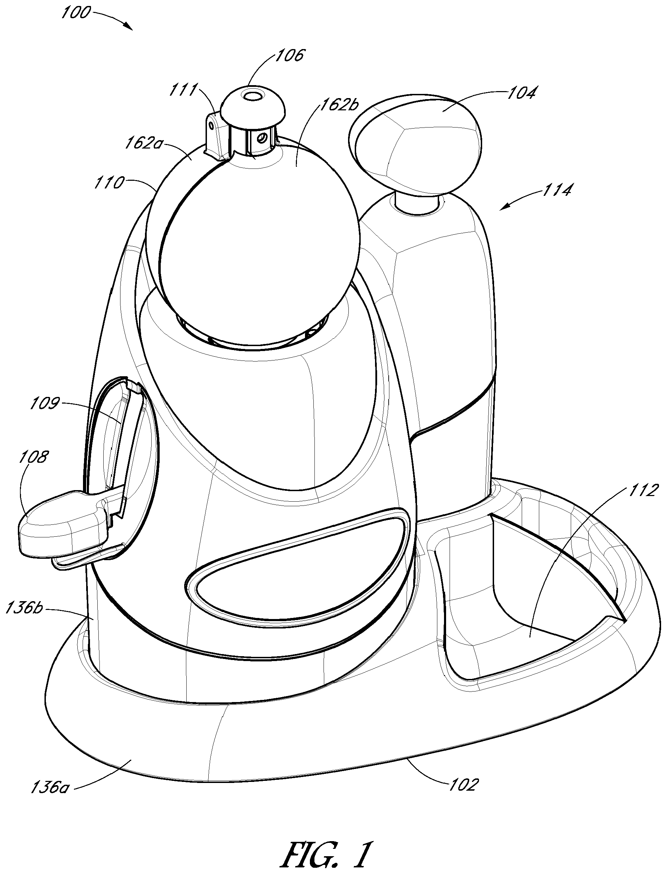

Figure 1 illustrates an embodiment of an inflation device 100. Certain embodiments of the inflation device 100 include a housing 102 and a fluid delivery system. In some embodiments, an inflatable toy, such as an inflatable toy pellet, can be coupled to or positioned within the housing 102 to receive fluid, such as a gas, flowing through the fluid delivery system. In some embodiments, the fluid is air.

In some embodiments, the inflation device 100 includes a base 136a. In some embodiments, the inflation device 100 includes a body 136b. The base 136a and body 136b can form at least a part of the housing 102.

In some embodiments, the inflation device 100 includes an inflation chamber 110. In some embodiments, the inflation chamber 110 can be configured to receive or house the inflatable toy. In some embodiments, the inflation chamber 110 can be configured to position the inflatable toy for receiving fluid flowing through the fluid delivery system. In some embodiments, the inflation chamber 110 can be configured to maintain the inflatable toy in position while the inflatable toy receives fluid flowing through the fluid delivery system.

In certain embodiments, the inflation chamber 110 can include a first section 162a and a second section 162b. The first section 162a and second section 162b can be movably coupled to one another. In some embodiments, the first section 162a and the second section 162b can move relative to one another to transition the inflation chamber 110 between an open configuration and a closed configuration. In some embodiments, the first section 162a and the second section 162b can rotate relative to one another. In some embodiments, the first section 162a and second section 162b are connected by a hinge 111. In certain embodiments, the first section 162a and second section 162b can rotate relative to one another about the hinge 111 to transition the inflation chamber 110 between the open configuration and the closed configuration. In some embodiments, the inflation chamber 110 can be generally spherical in shape. In some embodiments, the shape of the inflation chamber 110 can be configured to correspond to an inflated shape of the inflatable toy.

In certain embodiments, the inflation chamber 110 can include a gauge 106. In some embodiments, the gauge 106 can be positioned at least partially within the inflation chamber 110. In some embodiments, the gauge 106 can be movable within the inflation chamber 110. In some embodiments, at least a portion of the gauge 106 can extend out from within the inflation chamber 110. In some embodiments, at least a portion of the gauge 106 can extend through an opening within the inflation chamber 110. In some embodiments, the gauge 106 can provide an indication of a size or extent of inflation of an inflatable toy within the inflation chamber 110. In some embodiments, a surface of the gauge 106 can include one or more markings providing an indication of a size or extent of inflation of the inflatable toy within the inflation chamber 110.

In certain embodiments, the fluid delivery system can include a pump 114. The pump 114 can be actuated to cause fluid to flow through the fluid delivery system. In some embodiments, the pump 114 can be actuated to cause fluid to flow into the inflation chamber 110. In some embodiments, the pump 114 can be actuated to cause fluid to flow into the inflatable toy positioned within the inflation chamber 110. In some embodiments, the pump 114 can be actuated to cause fluid to flow through one or more passages within the housing 102. In some embodiments, the pump 114 can include a handle 104. During use, the handle 104 can be manipulated to operate the pump 114 to cause fluid to flow through the fluid delivery system. In some embodiments, the handle 104 can be a lever. In certain embodiments, one or more check valves associated with fluid delivery system can control the flow of fluid through the fluid delivery system. In some embodiments, one or more check valves can inhibit reverse flow of fluid within the fluid delivery system.

In certain embodiments, the fluid delivery system can include an actuator 108. In some embodiments, the actuator 108 can be a lever. In some embodiments, the actuator 108 can be manipulated to cause the movement of one or more sections of the fluid delivery system. In some embodiments, the actuator 108 can be manipulated to cause a section of the fluid delivery system, such as a tube or a needle, to engage and/or disengage the inflatable toy. In some embodiments, the actuator 108 can be manipulated to cause a section of the fluid delivery system, such as a tube or a needle, to extend into and/or retract from the inflation chamber 110. In some embodiments, the actuator 108 can be movable along a track or slot 109.

In certain embodiments, the inflation device 100 can include one or more compartments 112. In some embodiments, the one or more compartments 112 can be part of the base 136a. In some embodiments, the one or more compartments 112 can be used for storing one or more inflatable toys, such as an inflatable toy pellet.

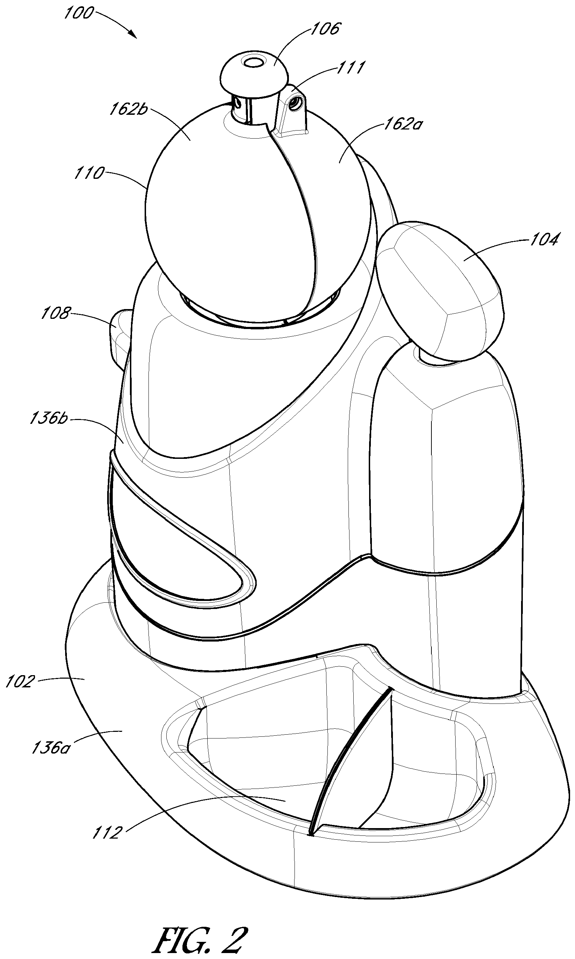

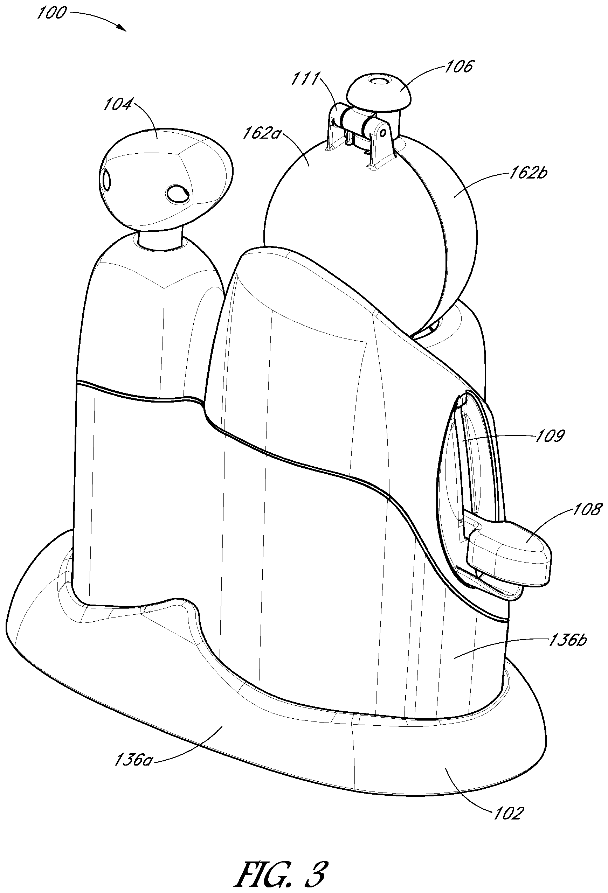

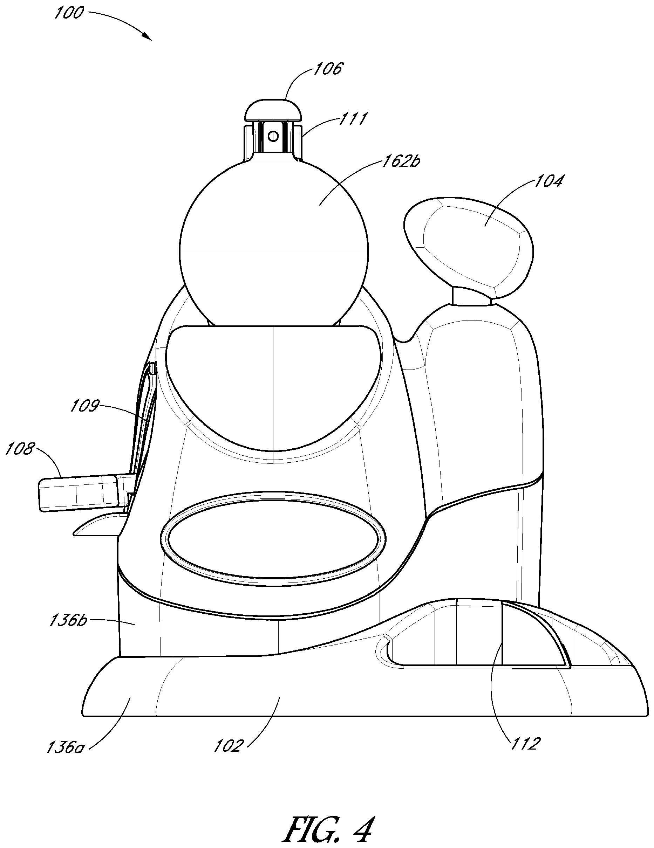

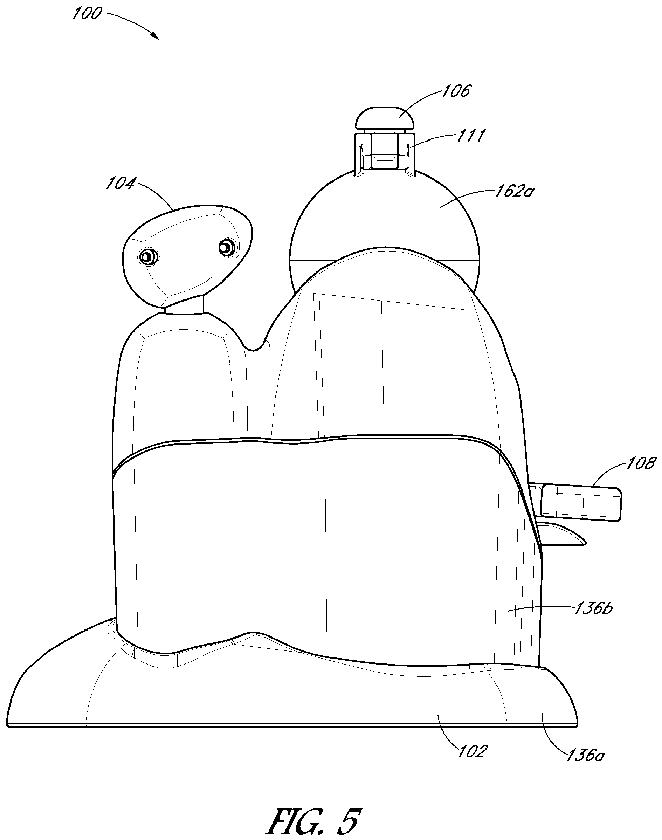

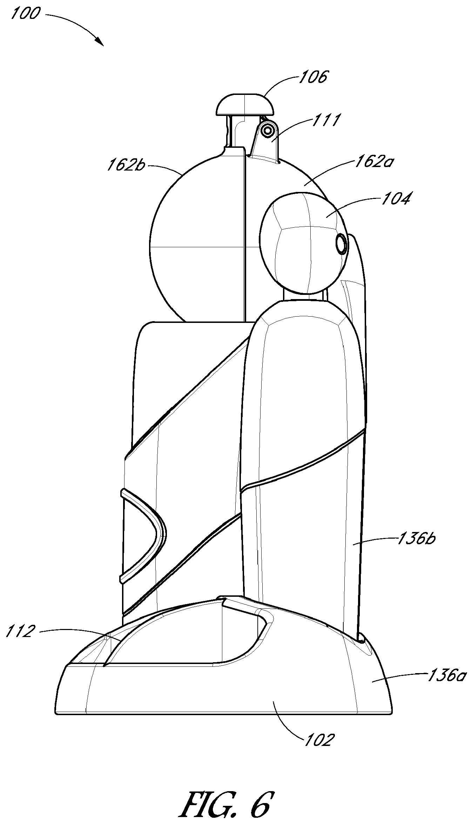

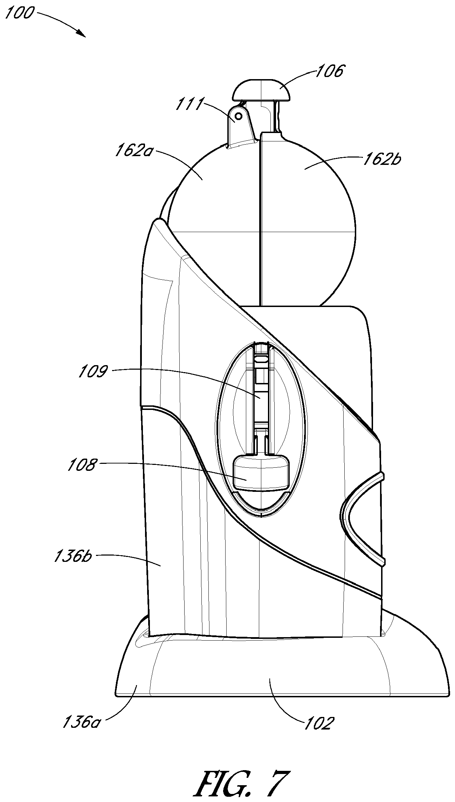

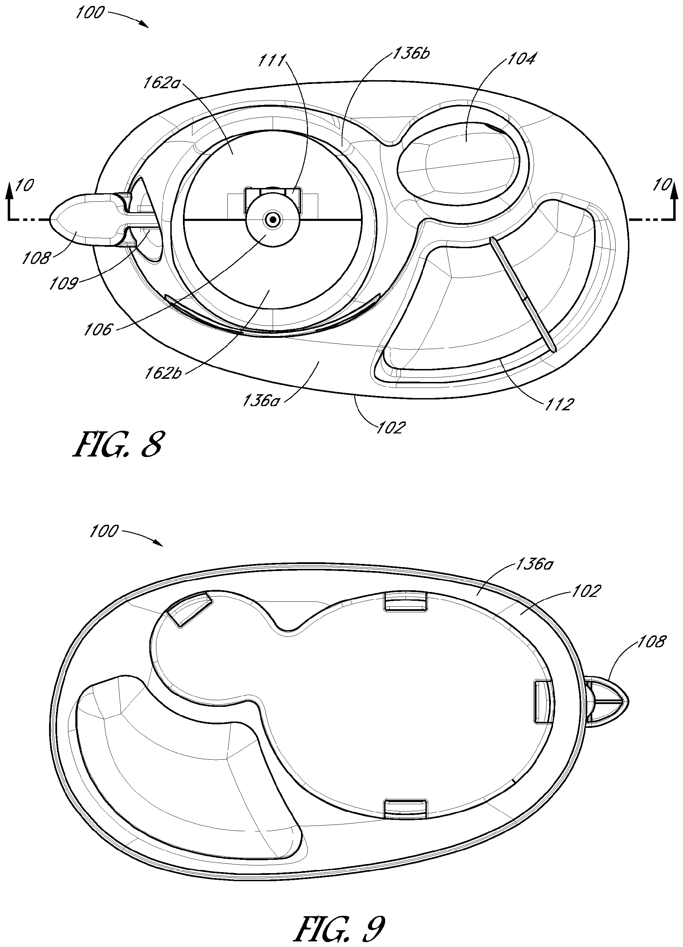

Figure 2 is a front perspective view of the inflation device 100 as shown in Figure 1. Figure 3 is a rear perspective view of the inflation device 100 as shown in Figure 1. Figure 4 is a front view of the inflation device 100, as shown in Figure 1. Figure 5 is a rear view of the inflation device 100 as shown in Figure 1. Figure 6 is a first side view of the inflation 100 as shown in Figure 1. Figure 7 is a second side view of the inflation device 100 as shown in Figure 1. Figure 8 is a top view of the inflation device 100 as shown in Figure 1. Figure 9 is a bottom view of the inflation device 100 as shown in Figure 1.

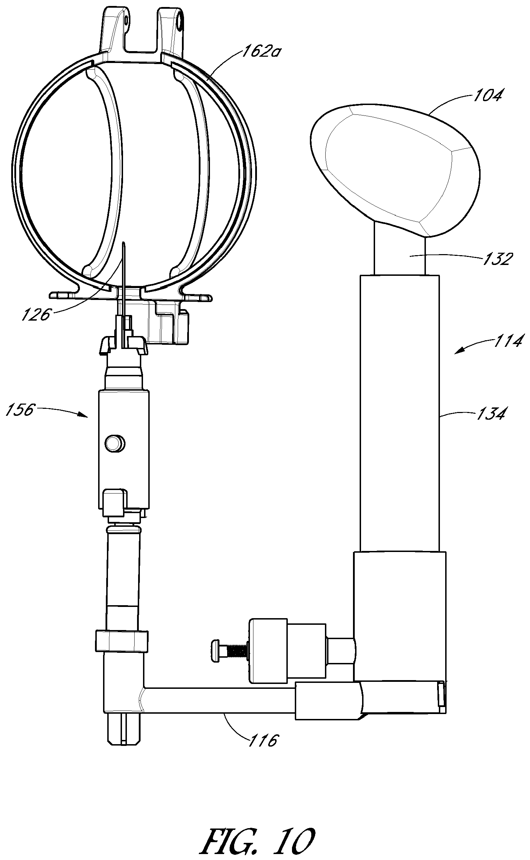

Figure 10 is a front view of a section of the inflation device 100 showing several internal components. Figure 10 is an embodiment of the fluid delivery system.

As described herein, certain embodiments of the fluid delivery system include the pump 114. In some embodiments, the pump 114 includes a pump chamber 134 and a plunger 132 slidingly disposed within the pump chamber 134. In certain embodiments, the plunger 132 includes a plunger rod having a proximal end configured to engage the handle 104. In some embodiments, movement of the handle 104 can cause movement of the plunger 132 within the pump chamber 134. This movement of the plunger rod of the plunger 132 causes a plunger head to compress air and flow the compressed air through the fluid delivery system. In some embodiments, the periphery of the plunger head can be configured to abut the interior surface of the pump chamber 134 in order to prevent reverse flow of air past the plunger head and towards a proximal end of the pump 114. In some embodiments, the pump chamber 134 is configured to be disposed on the base 136 and to be received within the housing 102.

Some embodiments of the fluid delivery system include a needle or tube 126. Some embodiments of the fluid delivery system include a passage 116. In some embodiments, the passage 116 extends between the pump 114 and the needle 126. In some embodiments, the passage 116 can include one or more pipes, tubes, or lumens configured to direct the flow of fluid through the fluid delivery system. In some embodiments, the passage 116 can include one or more pipes, tubes, or lumens connecting the pump 114 to the needle 126. In some embodiments, the fluid delivery system can include a plurality of passages 116 connecting various sections of the fluid delivery system.

In use, the handle 104 can be manipulated to actuate the pump 114. In some embodiments, actuation of the pump 114 can cause the compression and flow of fluid through the passage 116. In some embodiments, fluid can flow from the passage out of the needle 126. In some embodiments, the needle 126 can be hollow. In some embodiments, the needle 126 can include an internal passage having an entrance and one or more apertures for the air to exit the passage and enter an inflatable toy. In some embodiments, the needle 126 can include at least one aperture at its distal end to deliver fluid to the inflatable toy. In some embodiments, the needle 126 includes at least one aperture spaced apart from its distal end. In some embodiments, a plurality of apertures can form a showerhead configuration on the distal end of the needle 126. In some embodiments, the one or more apertures of the needle 126 are spaced to allow for even expansion of the inflatable toy circumferentially around needle 126 during inflation of the inflatable toy from a first configuration to a second configuration. In some embodiments, the needle 126 can be part of a needle assembly 156. In some embodiments, the needle assembly 156 can include a needle chamber 146 housing the needle 126.

In some embodiments, the inflation system 100 can include one or more check valves. The one or more check valves can allow fluid to flow through the passage 116 from the pump 114 to the needle 126. In some embodiments, the one or more check valves prevent the flow of fluid from the passage 116 back towards the pump 114. In certain embodiments, the fluid delivery system can include a pressure chamber. In certain embodiments, the pump 114 can be configured to compress and store a gas in the pressure chamber through one or more passages within the housing 102, such as passage 114. In some embodiments, the fluid delivery system can include a check valve that prevents the flow of fluid from the pressure chamber towards the pump 114.

In certain embodiments, the inflation device 100 can include an inflate button. In some embodiments, the inflate button can be manipulated to allow the flow of gas from the pressure chamber into the needle or tube within the inflation chamber 110. For example, the inflate button can open a valve that otherwise prevents the flow of gas into the inflation chamber 110. An inflatable toy, such as an inflatable pellet, can be positioned within the inflation chamber 110 to receive the gas flowing from the pressure chamber into the inflation chamber 110, allowing for inflation of the inflatable toy.

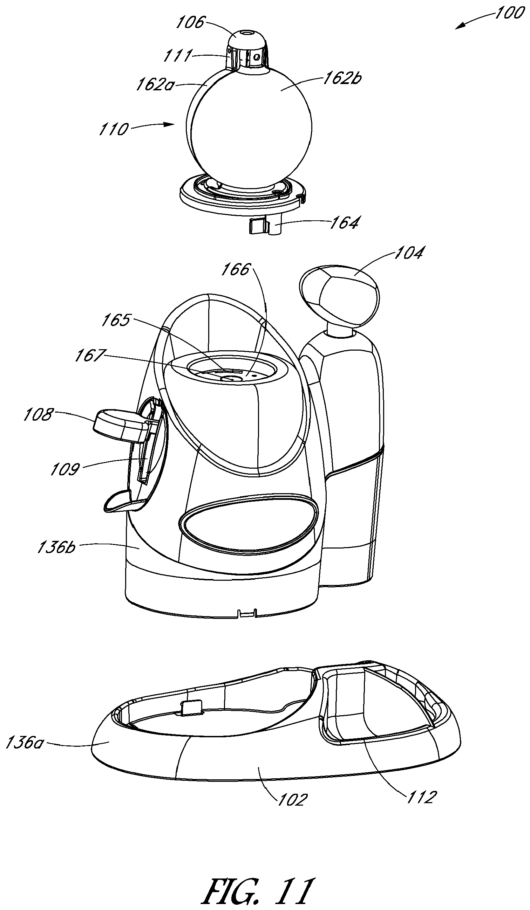

Figure 11 shows an exploded view of the inflation device 100. As shown in Figure 11, in some embodiments, the inflation chamber 110 is removable from the body 136b of the inflation device 100. In some embodiments, the body 136b is removable from the base 136a.

In some embodiments, the inflation chamber 110 includes one or more tabs 164. In certain embodiments, the one or more tabs 164 can protrude from an interior surface of the inflation chamber 110. In some embodiments, the one or more tabs 164 include a first tab (not shown) protruding from the first section 162a of the inflation chamber 110 and a second tab protruding from the second section 162b of the inflation chamber 110. In some embodiments, the tabs 164 can include one or more protrusions, detents, recesses, or other surface features configured to interact with one or more components of the inflation device 100.

In certain embodiments, the one or more tabs 164 are configured to be received within the body 136b of the inflation device 100. In some embodiments, the one or more tabs 164 are configured to be received within a surface 166 of the inflation device 100. In some embodiments, the one or more tabs 164 are configured to be received in one or more receptacles 165 of the inflation device 100. In some embodiments, the receptacles 165 are slots or tracks within the surface 166 of the inflation device 100. In some embodiments, the one or more tabs 164 can be releasably secured within the one or more receptacles 165. In some embodiments, the surface 166 of the inflation device 100 can support the inflation chamber 110 when the inflation chamber 110 is engaged with the surface 166.

In certain embodiments, the inflation device 100 can be configured so that an inflatable toy positioned within the inflation chamber 110 aligns with the fluid delivery system when the inflation chamber 110 is received within the body 136b of the inflation device 100. In some embodiments, the inflation device 100 can be configured so that the inflatable toy within the inflation chamber 110 is positioned to receive the needle 126. In some embodiments, the engagement between the one or more receptacles 165 of the surface 166 and the inflation chamber 110 can position and/or secure the inflation chamber 110 so that the inflatable toy positioned within the inflation chamber 110 aligns with the fluid delivery system when the inflation chamber 110 is received within the one or more receptacles 165 of the surface 166. In some embodiments, the engagement between the one or more receptacles 165 of the surface 166 and the inflation chamber 110 can position and/or secure the inflation chamber 110 so that the inflatable toy positioned within the inflation chamber 110 is positioned to receive the needle 126 when the inflation chamber 110 is received within the one or more receptacles 165 of the surface 166.

In certain embodiments, the needle 126 is movable within the body 136b of the inflation device 100. In some embodiments, the surface 166 includes an opening 167. In some embodiments, the opening 167 can be configured to receive the needle 126. In some embodiments, the needle 126 can be actuated to advance through the opening 167 and into the inflation chamber 110 when the inflation chamber 110 is received within the one or more receptacles 165 of the surface 166 of the inflation device 100. In some embodiments, the needle 126 can be actuated to advance through the opening 167 and into the inflatable toy positioned within the inflation chamber 110 when the inflation chamber 110 is within the one or more receptacles 165 of the surface 166 of the inflation device 100.

In certain embodiments, the actuator 108 can be manipulated to cause the needle 126 to extend into and/or retract from the inflation chamber 110. In some embodiments, the actuator 108 can be manipulated to cause the needle 126 to engage and/or disengage the inflatable toy when the inflatable toy is positioned within the inflation chamber 110. In some embodiments, the actuator 108 can be transitioned between a first position and a second position. In some embodiments, the first position of the actuator 108 corresponds to a resting or retracted position of the needle 126. In the resting or retracted position of the needle 126, the needle 126 can be positioned entirely within the housing 102. In some embodiments, the second position of the actuator 108 corresponds to an activated or extended position of the needle 126. In the activated or extended position, the needle 126 can extend at least partially out of the opening 167. In some embodiments, transition of the actuator 108 between the first position and the second position can transition the needle 126 between the retracted position and the extended position. An example of the actuator 108 positioned in the first position and the needle 126 positioned in the retracted position is shown in Figure 11. An example of the actuator 108 in the second position is shown in Figure 1. An example of the needle 126 in the extended position is shown in Figure 10.

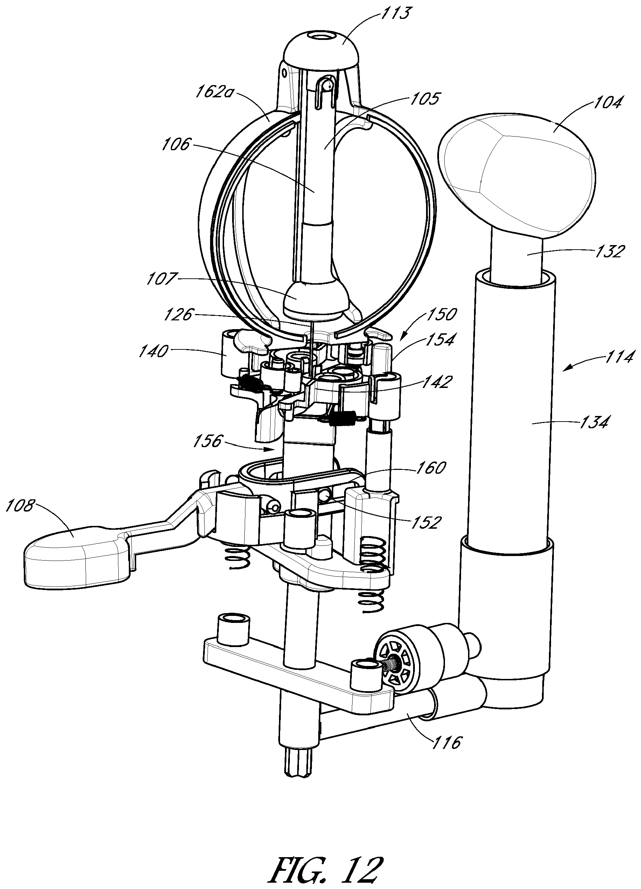

Figure 12 shows a perspective view of a section of the inflation device 100 showing several internal components. In some embodiments, the needle assembly 156 is movable within the body 136b of the inflation device 100. In some embodiments, the actuator 108 is configured to cause movement of the needle assembly 156 to cause the needle 126 to extend through and/or retract from the opening 167. In some embodiments, the needle assembly 156 can include one or more coupling members 152 configured to couple to the actuator 108. The actuator 108 can include one or more coupling members 160 configured to couple to the one or more coupling members 152. In some embodiments, the one or more coupling members 152 are protrusions or rods. In some embodiments, the one or more coupling members 160 are receptacles or slots configured to receive the one or more coupling members 152.

In some alternative embodiments, the inflation device 100 can include a needle delivery mechanism that causes the needle 126 to extend into the inflation chamber 110 when the inflation chamber 110 is engaged to the body 136b of the inflation device 100. In such embodiments, the needle delivery mechanism can cause the needle 126 to retract into the body 136 of the inflation device 100 when the inflation chamber 110 is disengaged from the body 136 of the inflation device 100. In some embodiments, the needle delivery mechanism can include one or more levers, pistons, springs, or other moving components configured to actuate in response to engagement of the inflation chamber 110 with the body 136b to cause the needle 126 to extend into the inflation chamber 110 and/or in response to disengagement of the inflation chamber 110 with the body 136b to cause the needle 126 to retract into the body 136b. In some embodiments, introduction of the tabs 164 into the receptacles 165 can cause the needle delivery mechanism to cause the needle 126 to extend into the inflation chamber 110. In some embodiments, disengagement of the tabs 164 from the receptacles 165 can cause the needle delivery mechanism to retract the needle 126 into the body 136b of the inflation device 100.

In certain embodiments, the inflation device 100 can include a locking system. In certain embodiments, the locking system can include one or more mechanisms for maintaining one or more components of the inflation device 100 in position during one or more steps in a process for using the inflation device 100.

In some embodiments, the inflation device can include a locking mechanism 140 configured to selectively prevent the needle 126 from extending out of the opening 167 of the surface 166. In certain embodiments, the locking mechanism 140 can selectively prevent movement of the needle assembly 156 within the body 136b of the inflation device 100. In certain embodiments, the locking mechanism 140 can selectively prevent movement of the needle assembly 156 towards the opening 167. In certain embodiments, the locking mechanism 140 can prevent the needle 126 from extending out of the opening 167 of the surface 166 when the inflation chamber 110 is not engaged with the body 136 of the inflation device 100. In certain embodiments, the locking mechanism is configured to prevent transition of the actuator 108 from the first position to the second position when the inflation chamber 110 is not engaged with the body 136 of the inflation device 100.

In certain embodiments, the locking mechanism 140 can include one or more members 142. In some embodiments, the members 142 can include one or more rotating members. In certain embodiments, the members 142 can include one or more detents, protrusions, leaves, recesses, etc., configured to move within the inflation device 100 to prevent the needle 126 from extending out of the opening 167 and/or to prevent movement of the needle assembly 156 in the direction of the opening 167. In certain embodiments, the members 142 can function as leaf shutter mechanism. In certain embodiments, the members 142 can move or rotate so that one or more portions of at least some of the members 142 are positioned between the needle 126 and/or needle assembly 156 and the opening 167 to obstruct the path of the needle 126 out of the opening 167.

In some embodiments, at least some of the members 142 can include one or more surfaces configured to couple to or interact with the tabs 164 of the inflation chamber 110. In some embodiments, movement of the tabs 164 within the receptacles 165 can cause the members 142 to transition between a locked configuration and an unlocked configuration. In some embodiments, in the locked configuration, the members 142 are positioned to prevent the needle 126 from extending from the opening 167. In some embodiments, in the unlocked configuration, the needle 126 is not prevented from extending out of the opening 167. In certain embodiments, the tabs 164 can be moved between a first position, in which the members 142 are in the unlocked configuration, and a second position, in which the members 142 are transitioned to the locked configuration. In some embodiments in which the receptacles 165 are slots or tracks, the tabs 164 can be moved between the first position and the second position by sliding the tabs 164 along the slots or tracks. In some embodiments, the tabs 164 can be moved between the first position and the second position by rotation of the inflation chamber 110 while the tabs 164 are positioned within the receptacles 165.

In certain embodiments, the inflation device 100 can include a locking mechanism 150. In certain embodiments, the locking mechanism 150 can selectively prevent disengagement of the inflation chamber 110 from the body 136b of the inflation device 100. In some embodiments, the locking mechanism 150 can selectively prevent removal of the tabs 164 from the receptacles 165. In some embodiments, the locking mechanism 150 can selectively prevent at least some movements of the tabs 164 within the receptacles 165. In some embodiments, the locking mechanism 150 can prevent disengagement of the inflation chamber 110 from the body 136b while the needle 126 extends out of the opening 167 in the extended position. In some embodiments, the locking mechanism 150 permits removal of the inflation chamber 110 from the body 136b when the needle 126 is entirely within the body 136b in the retracted position.

In some embodiments, the locking mechanism 150 includes one or more members 154. In some embodiments, the members 154 include one or more protrusions or rods configured to move within the inflation device 100 to restrict disengagement of the inflation chamber 110 from the body 136b of the inflation device 100. In certain embodiments, the one or more members 154 can move between an unlocked configuration and a locked configuration. In certain embodiments, the inflation chamber 110 can be disengaged from the body 136b of the inflation device 100 in the unlocked configuration and the inflation chamber 110 can be restricted from disengaging from the inflation device 100 in the locked configuration. In certain embodiments, the tabs 164 are permitted to move within the receptacles 165 when the one or more members 154 are in the unlocked configuration. In certain embodiments, the tabs 164 are restricted from movement within the receptacles 165 in at least one direction when the members 154 are in the locked configuration. In some embodiments, at least a portion of the one of the members 154 is positioned within at least a portion of one of the receptacles 165 when the members 154 are in the locked configuration. In some embodiments, the one or more members 154 prevent sliding of the tabs 164 within the receptacles 165 when the members 154 are positioned within at least a portion of the receptacles 165. In some embodiments, the one or more members 154 prevent rotation of the inflation chamber 110 when the one or more members 154 are positioned within the receptacles 165 and the tabs 164 are positioned within the receptacles 165.

In certain embodiments, the one or more members 154 can be coupled to the actuator 108. In some embodiments, when the actuator 108 is in the first position, the one or more members 154 are in the unlocked configuration. In some embodiments, when the actuator 108 is transitioned to the second position, the one or more members 154 move into the locked configuration. In some embodiments, when the actuator 108 is transitioned to the second position, the one or more members 154 move into a portion of the one or more receptacles 165. In some embodiments, the one or more members 154 are coupled to the needle assembly 156. In some embodiments, movement of the actuator 108 from the second position to the first position causes the one or more members 154 to move from the locked configuration to the unlocked configuration.

In certain embodiments, the members 142 can include one or more detents, protrusions, or other surface features that prevent disengagement of the inflation chamber 110 while the needle 126 is in the extended position. In some embodiments, the members 142 can include one or more detents, protrusions, or other surface features that prevent movement of the inflation chamber 110 in at least one direction while the needle is in the extended position. In some embodiments, the members 142 can include one or more detents, protrusions, or other surface features that prevent movement of the inflation chamber in a direction away from the surface 166 of the inflation device 100 when the needle 126 is in the extended configuration. In some embodiments, one or more detents, protrusions, or other surface features of the members 142 can engage a portion of the tabs 164 of the inflation chamber 110 when the needle 126 is in the extended configuration to restrict disengagement of the inflation chamber 110 from the body 136 of the inflation device 110. In some embodiments, when the tabs 164 engage the members 142 to transition the members 142 to the locked configuration, at least a portion of the tabs 164 contacts a surface of the members 142. In some embodiments, a portion of one of the members 142 engages with a portion of one of the tabs 164 so as to prevent movement of the tab 164 when the needle is in the extended configuration.

As shown in Figure 12, the gauge 106 can include a cup 107. In some embodiments, the gauge 106 can be positioned so that the cup 107 aligns with an inflatable toy when the inflatable toy is secured within the inflation chamber 110. In some embodiments, the gauge 106 can be moved within the inflation chamber 110 so that the cup 107 engages a portion of the inflatable toy when the inflation chamber 110 is coupled to the body 136b of the inflation device 100. In some embodiments, the gauge 106 can be positioned within the inflation chamber 110 so that inflation of the inflatable toy causes the gauge 106 to move out of the inflation chamber 110, for example, by exerting a force on the cup 107 of the gauge 106. In some embodiments, the gauge 106 can include one or more markings configured to indicate a level of inflation of the inflatable toy when visible outside of the inflation chamber 110. For example, a section of the gauge 106 configured to extend out of the inflation chamber 110 can include one or more lines and/or numbers indicating an amount of inflation of the pellet 182 within the inflation chamber. In some embodiments, the gauge 106 includes a shaft 105. The shaft 105 can include the one or more markings configured to indicate a level of inflation of the inflatable toy within the inflation chamber 110. In some embodiments, the inflation chamber can include a flange 113. The flange 113 can be configured to engage an exterior surface of the inflation chamber 110 when the shaft 105 is in its interior most position within the inflation chamber 110, for example, prior to inflation of the inflatable toy. In some embodiments, the shaft 105 can extend between the flange 113 and the cup 107.

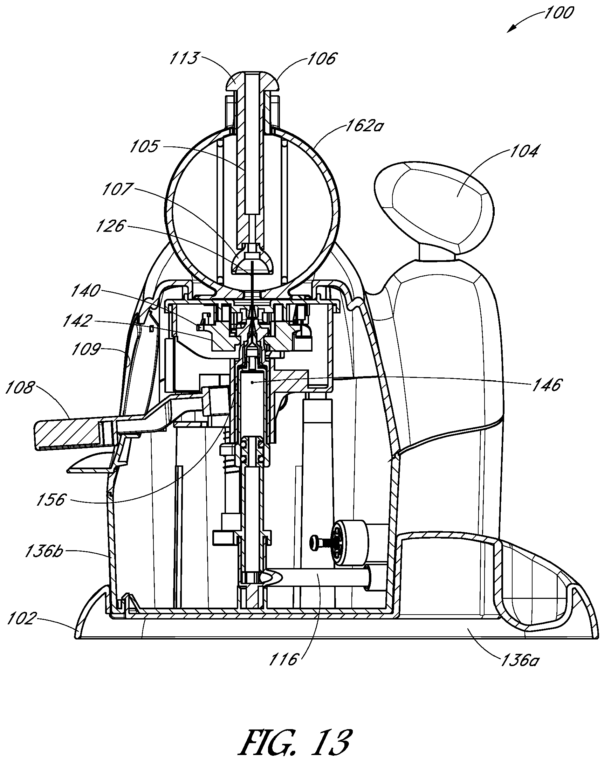

Figure 13 depicts a cross-sectional view of the inflation device 100. Figure 13 depicts the locking mechanism 140 and the passage 116 of the fluid delivery system.

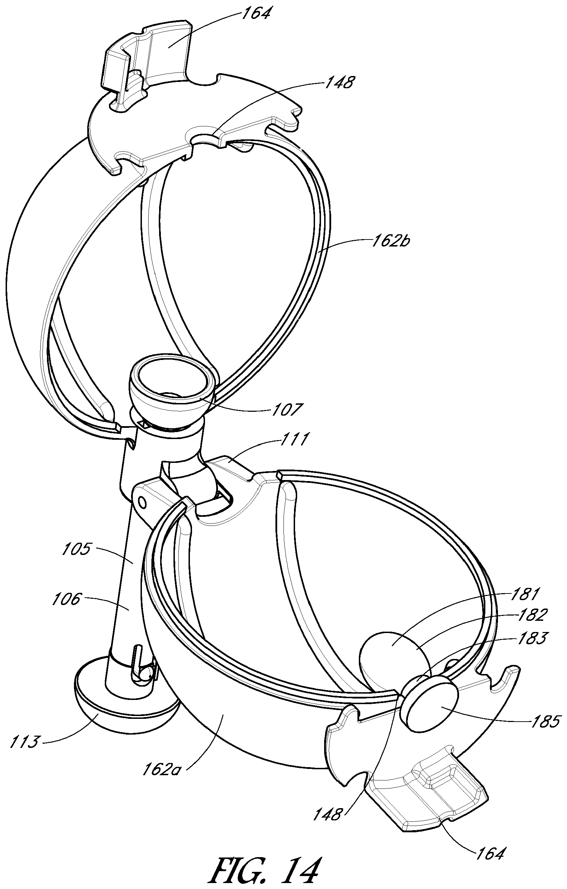

Figure 14 depicts an embodiment of an inflatable pellet 182 positioned within the inflation chamber 110. In certain embodiments, the inflatable pellet 182 can be configured to receive fluid from the fluid delivery system of the inflation device 100 when positioned within the inflation chamber 110. In certain embodiments, the inflatable pellet 182 can include a body 181. In some embodiments, the inflatable pellet 182 can include a stem 183 extending from the body 181. In some embodiments, the inflatable pellet 182 can include a base or flange 185. In some embodiments, the flange 185 extends from an end of the stem 183.

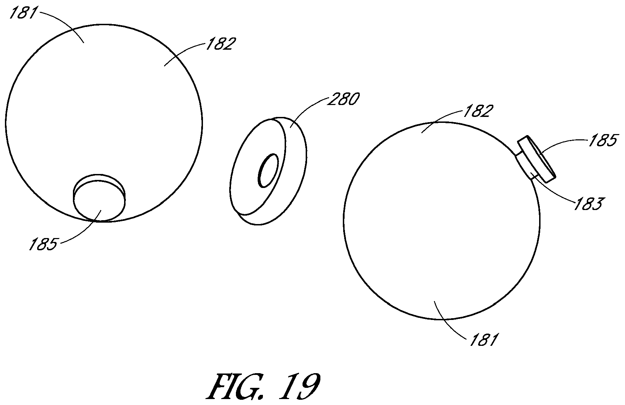

In certain embodiments, the stem 183 can be configured to receive fluid from the fluid delivery system of the inflation device 100. In certain embodiments, the stem 183 can be configured to be selectively punctured by a needle 126 or tube of the fluid delivery system of the inflation device 100. In certain embodiments, the stem can be sized and shaped so as to be grasped by the inflation device 100. Grasping of the stem 183 by the inflation device 100 can facilitate alignment with the needle 126. In some embodiments, the stem 183 is sized and shaped so as to be grasped by the inflation device 100 when punctured by the needle 126 so as allow the compressed fluid to enter the pellet 182 to expand the body 181 from a first configuration as shown in Figure 14 to a second configuration as shown in Figure 19. For example, the pellet 182 can include one or more grooves on an outer surface of the stem 183 for engaging with the inflation device 100. The one or more grooves can extend about the circumference of the stem 183. In some embodiments, the flange 185 can be configured to engage with the inflation device 100 at least when the needle 126 punctures the stem 183.

The pellet 182 can also include a channel configured to receive fluid from the needle 126. The channel can allow fluid to flow from the needle 126 to the interior of the body 181 of the pellet 182. The channel can extend through a portion of the stem 183 to an interior cavity of the body 181. In some embodiments, the pellet 182 can include an interior membrane defining an interior cavity of the pellet 182. The interior membrane can be punctured by the needle 126 to allow for inflation of the pellet 182 from the first configuration to the second configuration. The stem 183 can be configured to substantially seal after removal of the needle 126 from the stem 183 and when the body 181 is in the second configuration. In some embodiments, one or more bands or O-rings can be used to seal the stem 183 after removal of the needle 126. In some embodiments, the one or more bands or O-rings can be placed on the stem 183 prior to puncture of the pellet 182 by the needle 126. In some embodiments, the one or more bands or O-rings exert a force on the stem 183 to close the channel extending through the stem 183. In some embodiments, the pellet 182 can be attached to a nozzle positioned on the surface 166. In some embodiments, one or more bands or O-rings can be positioned on the nozzle prior to inflation of the pellet 182. In some embodiments, the one or more bands or O-rings can be slid or otherwise moved from the nozzle to the stem 183 either before or after inflation.

In some embodiments, the pellet 182 can have a cylindrical shape when in the first configuration. In some embodiments, the pellet 182 can have an oblong shape when in the first configuration. In some embodiments, the pellet 182 can be rounded or spherical in the first configuration. In some embodiments, the pellet 182 can be an elliptical shape when in the first configuration. In some embodiments, the pellet 182 can have a generally cubic shape in the first configuration. In some embodiments, the pellet 182 can have a generally pyramidal shape in the first configuration. In some embodiments, the pellet 182 can be solid when in the first configuration. Alternatively, one or more of the stem 183, body 181, or flange 185 are solid when in the first configuration. In the first configuration, a diameter of the pellet 182 can be between 10mm to 20mm. In some embodiments, in the second configuration the pellet 182 is between 3 times to 10 times the size of the pellet 182 in the first configuration. In some embodiments, in the second configuration the pellet 182 is at least 3 times the size of the pellet 182 in the first configuration. In some embodiments, the pellet 182 can have a diameter between 30mm to 100mm in the second configuration. In some embodiments, the pellet 182 can have a diameter of at least 30mm in the second configuration. In some embodiments, the pellet 182 can form a wall having an inner surface and an outer surface when in the second configuration.

The pellet 182 can comprise any material suitable for inflation using the inflation device 100. In some embodiments, at least a portion of the pellet 182 can be a plastic. In some embodiments, at least a portion of the pellet 182 can be a chemical compound. In some embodiments, at least a portion of the pellet 182 can be rubber. In some embodiments, at least a portion of the pellet is an elastic material. For example, at least a portion of the pellet 182 can be an elastomer, such as a synthetic rubber. In some embodiments, at least a portion of the pellet 182 can be styrene ethylene butadiene styrene (SEBS).

In some embodiments, at least a portion of the pellet 182 is a material having a 0° Shore A hardness measurement. In some embodiments, at least a portion of a pellet 182 is 0° Shore A SEBS. In some embodiments, at least a portion of a pellet 182 is less than 40° Shore 00 SEBS. In some embodiments, at least a portion of the pellet 182 is a material configured to be injection molded. In some embodiments, at least a portion of the pellet 182 is a material configured to be compression molded.

In certain embodiments, at least a portion of the pellet 182 includes an adhesive. In some embodiments, the adhesive can be embedded within the pellet 182. In some embodiments, the adhesive is coated on at least a portion of the pellet 182. In some embodiments, at least a portion of an outer surface of the pellet 182 has a sticky surface when the body is in the second configuration. In some embodiments, the adhesive material can has adhesion strength sufficient to facilitate the adhesion together of two or more inflated pellets 182.

In some embodiments, the pellet 182 can include a coating or barrier. In some embodiments, the coating or barrier can be configured to inhibit or slow deflation of the pellet 182 when the pellet 182 is in the second configuration. In some embodiments, the coating or barrier can inhibit or slow a flow of fluid from the interior of the pellet 182 to exterior of the pellet 182. In some embodiments, the coating or barrier can be applied to the outer surface of the pellet 182. In some embodiments, the coating or barrier can be applied to the inner surface of the pellet 182. In some embodiments, the coating or barrier can be embedded within the wall of the pellet 182.

In certain embodiments, the first section 162a and second section 162b of the inflation chamber 110 can move relative to one another to transition the inflation chamber 110 between an open configuration and a closed configuration. Figure 14 shows an example of the inflation chamber 110 in the open configuration. When in the open configuration, the inflation chamber 110 can be configured to receive the pellet 182.

In some embodiments, the inflation chamber 110 can include one or more recesses 148 configured to receive and/or secure the pellet 182 within the inflation chamber 110. In some embodiments, each of the first section 162a and the second section 162b includes a recess 148 for receiving and/or securing the pellet 182 within the inflation chamber 110. In some embodiments, the recesses 148 can be configured to receive the stem 183 of the pellet 182.

In some embodiments, transition of the inflation chamber 110 from the open configuration to the closed configuration secures a pellet 182 positioned within the recesses 148 within the inflation chamber 110. In some embodiments, the stem 183 of the pellet can be dimensioned to be secured within the recesses 148 when the inflation chamber 110 is in the closed configuration. In some embodiments, the recesses 148 are dimensioned to restrict movement of the pellet 182 when the inflation chamber 110 is in the closed configuration. In some embodiments, the recesses 148 form an opening within the inflation chamber 110 when the inflation chamber 110 is in the closed configuration. In some embodiments, the body 181 and/or the flange 185 can have a greater cross-sectional area or circumference than the opening formed by the recesses 148 when the inflation chamber 110 is in the closed configuration. In some embodiments, the opening formed by the recesses 148 when the inflation chamber 110 is in the closed configuration can prevent passage of the body 181 and/or flange 185 therethrough. In some embodiments, at least a portion of the pellet 182 can be supported by one or more interior surfaces of the inflation chamber 110.

In some embodiments, after the pellet 182 is secured within the inflation chamber 110, the inflation chamber 110 can be coupled to the body 136b of the inflation device 100, as described herein. In some embodiments, the inflation chamber 110 can be configured to secure the pellet 182 so that the pellet 182 is aligned with the opening 167 and/or needle 126 when the inflation chamber 110 is received within the body 136b of the inflation device 100. In some embodiments, the inflation chamber 110 can be configured to secure the pellet 182 so that the flange 185 is aligned with the opening 167 and/or needle 126 when the inflation chamber 110 is received within the body 136b of the inflation device 100. In some embodiments, the inflation chamber 110 can be configured to secure the pellet 182 so that the needle 126 is aligned to puncture a channel and/or membrane of the pellet 182 when the needle 126 is extended out of the opening 167. As described herein, when the needle 126 is positioned within the pellet 182, the inflation device 100 can direct fluid through the needle 126 to the pellet 182 to inflate the pellet 182 from the first configuration to the second configuration.

In certain embodiments, the needle 126 can include one or more surface features to prevent disengagement of the pellet 182 from the needle 126 or movement of the pellet 182 with respect to the needle 126 during inflation. For example, the needle 126 can include one or more barbs. In some embodiments, a cross-section through the needle 126 can vary along a central axis of the needle. In some embodiments, the stem 183 of the pellet 126 can be configured to substantially seal after removal of the needle 126 from the stem 183.

In some embodiments, following inflation of the pellet 182, the inflation chamber 110 can be removed from the inflation device 100 and the inflation chamber 110 can be opened to the open configuration to facilitate removal of the inflated pellet 182.

Figure 14 also shows the gauge 106 extending out of an opening or passage within the inflation chamber 110. In some embodiments, the gauge 106 can be positioned so that the cup 107 aligns with the pellet 182 when the pellet 182 is secured within the inflation chamber 110. In some embodiments, the gauge 106 can be moved within the inflation chamber 110 so that the cup 107 engages the body 181 of the pellet 182 when the inflation chamber 110 is coupled to the body 136b of the inflation device 100. In some embodiments, the gauge 106 can be positioned within the inflation chamber 110 so that inflation of the pellet 182 causes the gauge 106 to move out of the inflation chamber 110, for example, by exerting a force on the cup 107 of the gauge 106. In some embodiments, the gauge 106 can include one or more markings configured to indicate a level of inflation of the pellet 182 when visible outside of the inflation chamber 110. For example, a section of the gauge 106, such as the shaft 105, can include one or more lines and/or numbers indicating an amount of inflation of the pellet 182 within the inflation chamber 110.

In some alternative embodiments, the pellet 182 can be placed directly on the surface 166 prior to placement within the inflation chamber 110. In such embodiments, the inflation chamber 110 can be a lid. In such embodiments, the inflation chamber 110 may not engage the pellet 182 when the pellet 182 is positioned to receive the needle 126. In some embodiments, the inflation device 100 can include one or more clips configured to engage the pellet 182. In some embodiments, the clips can position the pellet 182 to align with the opening 167. In some embodiments, the clips can be configured to align the pellet 182 with the needle 126 such that the pellet 182 will receive the needle 126 when the needle 126 advances through the hole in the surface 166. In some embodiments, the clips can be secured to the surface 166. In some embodiments, the clips can be rotatable relative to one another. In some embodiments, the clips can include an opening for receiving the needle 126 when the pellet 182 is secured within the clips.

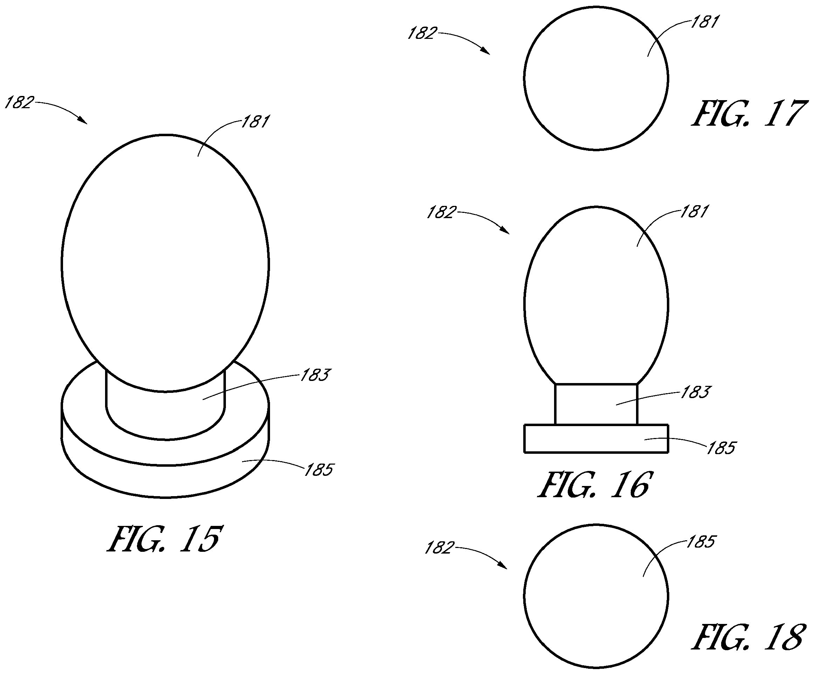

Figure 15 depicts a perspective view of the pellet 182. Figure 16 depicts a front view of the pellet 182. Figure 17 depicts a top view of the pellet 182. Figure 18 depicts a bottom view of the pellet 182.

In some embodiments, after the pellet 182 is inflated to the second configuration and removed from the inflation device 100, the pellet 182 can engage one or more other pellets 182 to form a toy structure. Figure 19 depicts a pair of pellets 182 in the second or inflated configuration. In some embodiments, the pellets 182 can be configured to attach to or adhere to one another. As described herein, in some embodiments, at least a portion of the pellet 182 can include an adhesive. In some embodiments, the adhesive can be embedded within the pellet 182. In some embodiments, the adhesive is coated on at least a portion of the pellet 182. In some embodiments, at least a portion of an outer surface of the pellet 182 has a sticky surface when the body is in the second configuration. In some embodiments, the adhesive material can have adhesion strength sufficient to facilitate the adhesion of two or more pellets 182 together.

In some embodiments, additional components can be placed in a toy structure of pellets 182, such as a connector 280, as shown in Figure 19. Additional components can include connectors, suction cups, stickers, paper, felt, glitter, or any other components configured to adhere to the structure of pellets 182.

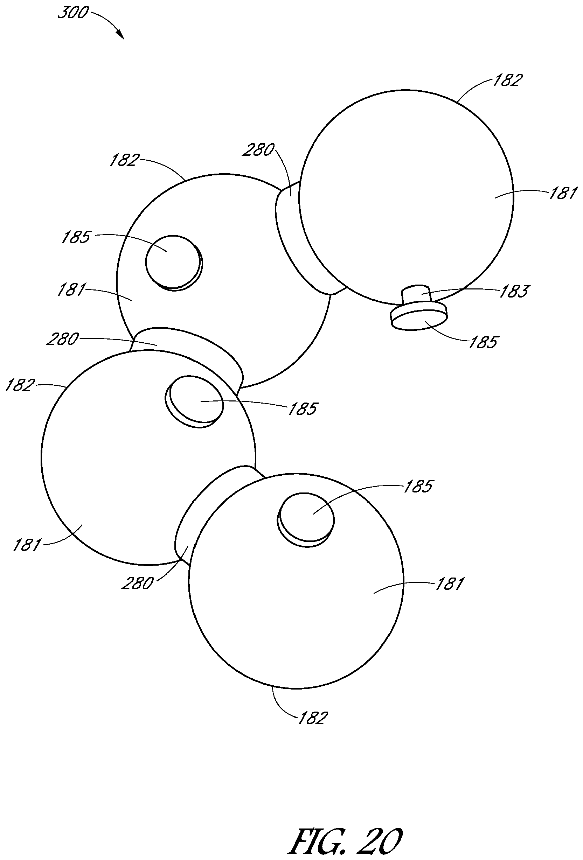

An example of a toy structure 300 is shown in Figure 20. As shown in Figure 20, the toy structure 300 can include a plurality of pellets 182. The toy structure can also include a plurality of connectors 280 or other additional components as described herein. In some embodiments, after the pellets 182 are connected to one another, the pellets 182 can be rearranged to form a different design. In some embodiments, multiple inflatable pellets are provided that have different shapes when inflated. In some embodiments, the pellet 182 can comprise a material that allows for drawing, painting, writing, coloring, or otherwise marking the exterior surface of the inflated pellet 182.

In some embodiments, the pellets 182 can be configured to adhere to or at least partially adhere to one or more surfaces, such as walls, doors, ceilings, or windows. In some embodiments, one or more games can be played with the pellets 182. For example, a user can toss one or more pellets 182 at a surface to adhere the pellets 182 to the surface. In some embodiments, the pellets 182 can come in a variety of colors to facilitate gameplay using the pellets 182. For example, in some embodiments, multiple users can toss pellets 182 at a surface to adhere the pellets 182 to the surface. Each user can toss a different color pellet 182 with a goal of creating a shape using the color of pellet 182 assigned to the user. In some embodiments, a game can include stacking pellets 182 to create a toy structure. In some embodiments, two or more players can compete to create a tallest toy structure.

While the above detailed description has shown, described, and pointed out novel features of the development as applied to various embodiments, it will be understood that various omissions, substitutions, and changes in the form and details of the devices illustrated may be made by those skilled in the art without departing from the spirit of the development. As will be recognized, the present development may be embodied within a form that does not provide all of the features and benefits set forth herein, as some features may be used or practiced separately from others. All changes which come within the meaning and range of equivalency of the claims are to be embraced within their scope.

The foregoing description details certain embodiments of the systems, devices, and methods disclosed herein. It will be appreciated, however, that no matter how detailed the foregoing appears in text, the systems, devices, and methods may be practiced in many ways. As is also stated above, it should be noted that the use of particular terminology when describing certain features or aspects of the invention should not be taken to imply that the terminology is being re-defined herein to be restricted to including any specific characteristics of the features or aspects of the technology with which that terminology is associated.

It will be appreciated by those skilled in the art that various modifications and changes may be made without departing from the scope of the described technology. Such modifications and changes are intended to fall within the scope of the embodiments. It will also be appreciated by those of skill in the art that parts included in one embodiment are interchangeable with other embodiments; one or more parts from a depicted embodiment may be included with other depicted embodiments in any combination. For example, any of the various components described herein and/or depicted in the Figures may be combined, interchanged or excluded from other embodiments.

With respect to the use of substantially any plural and/or singular terms herein, those having skill in the art may translate from the plural to the singular and/or from the singular to the plural as is appropriate to the context and/or application. The various singular/plural permutations may be expressly set forth herein for sake of clarity.

It will be understood by those within the art that, in general, terms used herein are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation is explicitly recited, those skilled in the art will recognize that such recitation should typically be interpreted to mean at least the recited number (e.g., the bare recitation of "two recitations," without other modifiers, typically means at least two recitations, or two or more recitations). Furthermore, in those instances where a convention analogous to "at least one of A, B, and C, etc." is used, in general such a construction is intended in the sense one having skill in the art would understand the convention (e.g., "a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., "a system having at least one of A, B, or C" would include but not be limited to systems that have A alone, B alone, C alone, A and B together, A and C together, B and C together, and/or A, B, and C together, etc.). It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

The term "comprising" as used herein is synonymous with "including," "containing," or "characterized by," and is inclusive or open-ended and does not exclude additional, unrecited elements or method steps.

The above description discloses several methods of manufacture and materials of the present development. This development is susceptible to modifications in the methods and materials, as well as alterations in the fabrication methods and equipment. Such modifications will become apparent to those skilled in the art from a consideration of this disclosure or practice of the development disclosed herein. Consequently, it is not intended that this development be limited to the specific embodiments disclosed herein, but that it cover all modifications and alternatives coming within the true scope and spirit of the development as embodied in the attached claims.

While the above detailed description has shown, described, and pointed out novel features of the improvements as applied to various embodiments, it will be understood that various omissions, substitutions, and changes in the form and details of the device or process illustrated may be made by those skilled in the art without departing from the spirit of the invention. As will be recognized, the present invention may be embodied within a form that does not provide all of the features and benefits set forth herein, as some features may be used or practiced separately from others. The scope of the invention is indicated by the appended claims rather than by the foregoing description. All changes which come within the meaning and range of equivalency of the claims are to be embraced within their scope.

## Claims

1. An inflatable toy pellet having a body and a stem extending outwardly from the body, the stem being configured to be selectively punctured by a needle, **characterized in that** the body and/or the stem is sized and shaped so as to be grasped by an inflation device when punctured by the needle so as to expand the body from a first configuration to a second configuration.

2. The toy pellet of Claim 1, wherein the body has a cylindrical shape or an oblong shape when in the first configuration.

3. The toy pellet of Claim 1, wherein at least a portion of the pellet is a plastic, or is a chemical compound, or is rubber, or is an elastic material, or is a synthetic rubber, or is a material configured to be injection molded, or is a material configured to be compression molded.

4. The toy pellet of Claim 1, wherein at least a portion of the pellet is Styrene Ethylene Butylene Styrene (SEBS), and preferably at least a portion of the pellet is 0 degree Shore A, or is 40 degree Shore 00.

5. The toy pellet of Claim 1, wherein at least a portion of the pellet is a plastic and the portion of the pellet includes adhesive, and preferably either the adhesive is embedded within the pellet, or the adhesive is coated on at least a portion of the pellet.

6. The toy pellet of Claim 1, wherein the stem is configured to substantially seal after removal of the needle from the stem and when the body is in the second configuration, and/or
the stem has a flange on a distal end, the flange being configured to engage with the inflation device at least when the needle punctures the stem.

7. The toy pellet of Claim 1, wherein at least a portion of an outer surface of the pellet has a sticky surface when the body is in the second configuration.

8. The toy pellet of Claim 1, wherein the pellet is solid when in the first configuration, and/or
the toy pellet has a diameter between 10mm to 20mm when in the first configuration.

9. The toy pellet of Claim 1, wherein the pellet forms an internal chamber when in the second configuration, and/or
the pellet can include an interior membrane defining an interior cavity of the pellet.

10. The toy pellet of Claim 1, wherein the stem has one or more grooves in an outer surface for engaging with the inflation device, and preferably the one or more grooves extend about a circumference of the stem.

11. The toy pellet of Claim 1, wherein the second configuration is at least 3 times the size of the first configuration, and preferably between 3 times to 10 times the size of the first configuration, and/or
wherein the pellet forms a wall having an inner surface and an outer surface when in the second configuration, the wall having a thickness.

12. An inflation device for inflating a pellet, the device comprising:
a housing having a pump, a surface for positioning the pellet, and a needle in flow communication with the pump, the needle being configured to move between an extended position and a retracted position relative to the surface, at least a distal end of the needle being disposed above the surface when in the extended position so as to penetrate at least a portion of the pellet when the pellet is positioned by the surface to allow fluid from the pump to exit the needle and inflate the pellet.

13. The inflation device of Claim 12, further comprising an inflation chamber, the inflation chamber being securable to the housing over the surface, and optionally the inflation chamber is sized so as to accommodate the pellet when the pellet is in an inflated configuration, and/or
securing the inflation chamber to the housing allows the needle to move to the extended position.

14. The inflation device of Claim 12, wherein the needle comprises a passage having an entrance and at least one exit, the at least one exit being disposed in the portion of the pellet at least when the needle is in the extended position, and optionally the at least one exit forms a showerhead configuration on the distal end of the needle, or the at least one exit includes two exits, the two exits being disposed on diametrically opposed sides of the needle.

15. The inflation device of Claim 12, wherein a surface of the needle is configured to resist movement of the pellet along the needle in one direction, and optionally the surface of the needle comprises one or more barbs and/or a cross-section through the needle varies along a central axis of the needle.
